Europäisches Patentamt

European Patent Office

Office européen des brevets

(19)

(11) Veröffentlichungsnummer: **0 230 849**
**A1**

(12) **EUROPÄISCHE PATENTANMELDUNG**

(21) Anmeldenummer: **86730016.2**

(22) Anmeldetag: **29.01.86**

(51) Int. Cl.4: **F16K 1/12**

(43) Veröffentlichungstag der Anmeldung:
**05.08.87 Patentblatt 87/32**

(84) Benannte Vertragsstaaten:
**DE NL**

(71) Anmelder: **MANNESMANN Aktiengesellschaft**
**Mannesmannufer 2**
**D-4000 Düsseldorf 1(DE)**

(72) Erfinder: **Sattelberg, Manfred**
**St.-Martinusstrasse 24**
**D-5140 Erkelenz(DE)**
Erfinder: **Nechtelberger, Horst, Dipl.-Ing.**
**Halbinsel 28**
**D-4050 Mönchengladbach 4(DE)**

(74) Vertreter: **Meissner, Peter E., Dipl.-Ing. et al**
**Meissner & Meissner Patentanwälte**
**Herbertstrasse 22**
**D-1000 Berlin 33 Grunewald(DE)**

(54) **Regelventil/Absperrventil.**

(57) Die Erfindung betrifft ein Regelventil bestehend
aus einem Gehäuse sowie einem in dem Gehäuse
an Rippen aufgehängten Anströmkörper, in dem ein
als Kolben ausgebildeter Absperrkörper axial verschiebbar geführt ist, wobei die Verschiebung über
einen aus dem Gehäuse herausgeführten Stab, dessen Verzahnung in eine Verzahnung des Absperrköpers eingreift, erfolgt. Um ein Regelventil so
auszubilden, daß der Wirkungsgrad der Verstelleinrichtung durch nahezu vollständige Aufhebung der
Reibungsverluste an den Flanken des Zahnantriebes
vergrößert wird und daß darüber hinaus die Gefahr
eines Herausstoßens des Drehstabes bei plötzlichen
Druckstößen vermieden wird, wird vorgeschlagen,
daß der Stab (4) drehbar gelagert ist und an seinem
dem zu verschiebenden Absperrkörper (3) zugewandten Ende eine Längsverzahnung (5) aufweist,
die in eine geradverzahnte Zahnstange (6) am Absperrkörper (3) eingreift.

Neu Regelventil Typ MRV

DN 100 · 1000 mm
PN bis 250 bar

Antriebsarten
hydraulisch
pneumatisch
elektrisch
Handbetrieb

## Regelventil/Absperrventil

Die Erfindung betrifft ein Regelventil bestehend aus einem Gehäuse, sowie einem in dem Gehäuse an Rippen aufgehängten Anströmkörper, in dem ein als Kolben ausgebildeter Absperrkörper axial verschiebbar geführt ist, wobei die Verschiebung über einen aus dem Gehäuse herausgeführten Stab, dessen Verzahnung in eine Verzahnung des Absperrkörpers eingreift, erfolgt.

Ein Regelventil dieser Art ist bspw. aus der DE-A-29 29 389 bekannt. Hierbei weist der Stab, der senkrecht zur Ventilachse verschiebbar ist, eine 45°-Schrägverzahnung auf und diese steht mit einer schrägverzahnten Zahnstange am Absperrkörper in Eingriff. Wird bei dieser Ausführung das Handrad, das mit dem Stab verbunden ist, betätigt, so wird der Stab in Richtung auf den Absperrkörper verschoben und drückt über die Verzahnungen den Absperrkörper in axialer Richtung, um damit das Ventil zu schließen bzw. zu öffnen.
Bei einer derartigen 45°-Schrägverzahnung sind relativ hohe Verstellkräfte notwendig, weil durch die vorgegebene Zahnflankenneigung eine große Flankenreibung auftritt. Ein sehr weiterer wesentlicher Nachteil ist darin zu sehen, daß bei plötzlich auftretenden Druckstößen es durchaus möglich ist, daß der nach außen geführte Stab herausgedrückt wird. Damit ist das Ventil dann funktionsunfähig geworden. Insgesamt läßt sich auf jeden Fall feststellen, daß der Wirkungsgrad dieser Antriebseinrichtung für den Absperrkörper einen schlechten Wirkungsgrad aufweist und daß darüber hinaus bei Verwendung eines Motorantriebes anstelle des vorgesehenen Handrades andere Übersetzungsverhältnisse vorgesehen sein müssen.

Aufgabe der Erfindung ist es, ein Regelventil der eingangs genannten Art so auszubilden, daß der Wirkungsgrad der Verstelleinrichtung durch nahezu vollständige Aufhebung der Reibungsverluste an den Flanken des Zahnantriebes vergrößert wird und daß darüber hinaus die Gefahr eines Herausstoßens des Drehstabes bei plötzlichen Druckstößen vermieden wird.

Gelöst wird diese Aufgabe erfindungsgemäß dadurch, daß der Stab drehbar gelagert ist und an seinem dem zu verschiebenden Absperrkörper zugewandten Ende eine Längsverzahnung aufweist, die in eine geradverzahnte Zahnstange am Absperrkörper eingreift.

Gemäß einer Weiterbildung ist vorgesehen, daß auch das aus dem Gehäuse herausgeführte Ende des Stabes mit einer derartigen Längsverzahnung versehen ist, die dann entsprechend in eine Geradverzahnung einer Zahnstange eingreift, so daß auf diese Weise, wenn diese Zahnstange mit einem Motor verbunden ist, die Betätigung des Ventiles erfolgen kann. Selbstverständlich ist es auch möglich, daß auf die Längsverzahnung direkt ein Handrad aufgesetzt werden kann, um einen manuellen Betrieb des Ventiles zu ermöglichen.

Gegenüber der bekannten Schrägverzahnung zeichnet sich die erfindungsgemäße Geradverzahnung bzw. Längsverzahnung beim Ineinandergreifen durch sehr geringe Reibungsverluste aus, so daß der Wirkungsgrad beim Verstellen dieses Ventiles wesentlich höher ist. Damit wird auch der Verschleiß des Ventiles vermindert und insgesamt die Lebensdauer erhöht.

Die Erfindung soll nachfolgend anhand eines Längschnittes durch das Regelventil erläutert werden.

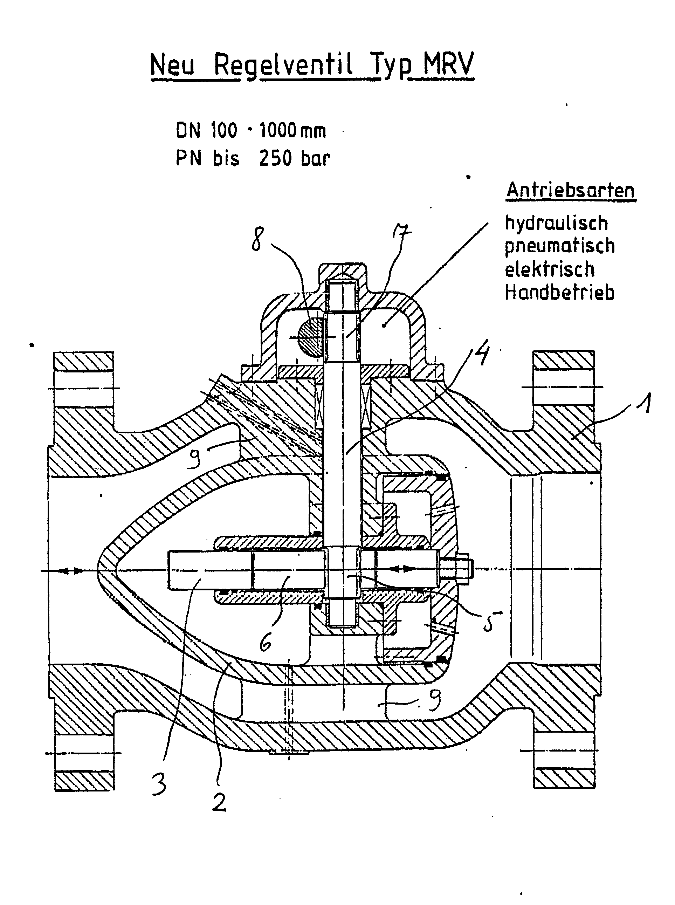

In der Figur ist das Gehäuse des Regelventiles mit 1 bezeichnet. In diesem Gehäuse befindet sich an Rippen 9 aufgehängt ein Anströmkörper 2 und in dessen Inneren ist ein als Kolben ausgebildeter Absperrkörper 3 angeordnet. Dieser Absperrkörper 3 kann mittels eines drehbaren Stabes 4 in Axialrichtung des Regelventiles verschoben werden, um dieses dadurch zu öffnen bzw. zu schließen. Die Verschiebung wird über eine Verzahnung des Stabes ermöglicht, wobei dieser Stab eine Längsverzahnung 5 aufweist, die mit einer geradverzahnten Zahnstange 6 am Absperrkörper 3 in Eingriff steht. Bei der dargestellten Ausführung ist eine entsprechende Längsverzahnung 7 an dem Ende des Stabes 4 angeordnet, das aus dem Gehäuse 1 herausgeführt ist. Diese Längsverzahnung 7 steht ebenfalls mit einer geradverzahnten Zahnstange 8 in Eingriff, so daß eine Betätigung des Stabes 4 möglich ist, wenn bspw. an diese Zahnstange 8 ein Motor oder ein Hydraulik-oder Pneumatikzylinder angeschlossen ist. Selbstverständlich ist es auch möglich, den Stab 4 über ein Handrad anzutreiben, das in diesem Fall dann direkt auf die Längsverzahnung 7 aufgesetzt wroden ist. Von besonderem Vorteil bei dieser Art der Verzahnung zwischen Stab und Absperrkörper bzw. Stab und Antrieb ist, daß das Übersetzungsverhältnis den notwendigen Gegebenheiten durch entsprechende Wahl der Verzahnung in einfacher Weise angepaßt werden kann, so daß bei grundsätzlich gleichem Aufbau eine Vielzahl von Variationsmöglichkeiten für dieses Regelventil gegeben ist.

**Ansprüche**

1. Regelventil bestehend aus einem Gehäuse sowie einem in dem Gehäuse an Rippen aufgehängten Anströmkörper, in dem ein als Kolben ausgebildeter Absperrkörper axial verschiebbar geführt ist, wobei die Verschiebung über einen aus dem Gehäuse herausgeführten Stab, dessen Verzahnung in eine Verzahnung des Absperrkörpers eingreift, erfolgt,
**dadurch gekennzeichnet,**
daß der Stab (4) drehbar gelagert ist und an seinem dem zu verschiebenden Absperrkörper (3) zugewandten Ende eine Längsverzahnung (5) aufweist, die in eine geradverzahnte Zahnstange (6) am Absperrkörper (3) eingreift.

2. Regelventil nach Anspruch 1,
**dadurch gekennzeichnet,**
daß auch das aus dem Gehäuse (1) herausgeführte Ende des Stabes (4) eine Längsverzahnung (7) aufweist, die mit einer eine Geradverzahnung aufweisenden Zahnstange (8) in Eingriff steht, an die ein Antrieb angeschlossen ist.

# Neu Regelventil Typ MRV

DN 100 · 1000 mm
PN bis 250 bar

## Antriebsarten

hydraulisch
pneumatisch
elektrisch
Handbetrieb

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-1 943 401 (THOMAS) <br> * Seite 3, Zeilen 37-65; Figur 2 * | 1,2 | F 16 K 1/12 |
| | --- | | |
| A | EP-A-0 123 185 (KLINGER) <br> * Figur 4 * | 1 | |
| | --- | | |
| A | US-A-2 652 851 (SCHMIDT et al.) <br> * Figuren 1, 2 * | 1 | |
| | --- | | |
| A | FR-A- 763 362 (HAUTS FOURNEAUX ET FONDERIES DE PONT-A-MOUSSON) <br> * Figuren 1, 2 * | 1 | |
| | --- | | |
| A | US-A-1 919 165 (KINZIE) <br> * Figuren 2, 8 * | 1 | |
| | --- | | RECHERCHIERTE SACHGEBIETE (Int. Cl.4) |
| A | GB-A-2 054 103 (MACHINEFABRIEK MOKVELD) <br> * Figur 1 * | 1 | F 16 K 1/00 |
| | ----- | | |

Der vorliegende Recherchenbericht wurde für alle Patentansprüche erstellt.

| Recherchenort | Abschlußdatum der Recherche | Prüfer |
|---|---|---|
| BERLIN | 30-09-1986 | SCHLABBACH M |